# EUROPÄISCHE PATENTSCHRIFT

(11) **EP 2 690 333 B1**
(45) Veröffentlichungstag und Bekanntmachung des Hinweises auf die Patenterteilung: **27.04.2016**
(21) Anmeldenummer: 13176864.0
(22) Anmeldetag: 17.07.2013
(51) Int. Cl.: F16K 47/08, F16K 27/06, F16K 5/12

(54) **Regelkugelhahn**
Regulating ball valve
Robinet de régulation à boisseau sphérique

(30) Priorität: 26.07.2012 DE 102012106803
(43) Veröffentlichungstag der Anmeldung: 29.01.2014
(73) Patentinhaber: Artes Valve & Service GmbH, 16727 Velten (DE)
(72) Erfinder: Jäkel, Horst, 16515 Oranienburg (DE)
(74) Vertreter: Patentanwälte Olbricht Buchhold Keulertz

(56) Entgegenhaltungen:
- US-A- 4 295 493
- US-A- 5 988 586
- US-A1- 2010 258 193

## Beschreibung

Die Erfindung betrifft einen Regelkugelhahn gemäß dem Oberbegriff von Anspruch 1.
Der Regelkugelhahn weist also ein Ventilgehäuse auf, das mit einem Einlass und mindestens einem Auslass versehen ist. Innerhalb des Ventilgehäuses ist eine senkrecht zu einer Strömungsrichtung drehbare Ventilkugel angeordnet, die mindestens einen Ventilkanal aufweist und in beliebige Winkelstellungen zwischen einer Offenstellung, in der der Einlass und der Auslass fluidleitend miteinander verbunden sind, und einer Schließstellung, in der der Einlass und der Auslass voneinander getrennt sind, bewegbar ist. Die Offenstellung und die Schließstellung liegen dabei in der Regel 90° auseinander. Benachbart zur Ventilkugel ist mindestens eine Regelscheibe angeordnet. An einer von der Ventilkugel abgewandten Außenseite der Regelscheibe befindet sich mindestens eine Lochscheibe.

Derartige Regelkugelhähne werden zur Steuerung des Durchflusses flüssiger oder gasförmiger Medien wie z.B. Wasser, Gas oder Heißdampf eingesetzt. Dabei ermöglicht ein Regelkugelhahn eine Druck- und Mengenregelung. Über die Regelscheibe und die Lochscheibe, die als Drosselstellen dienen, erfolgt dabei eine mehrstufige Druckreduzierung.

In der Offenstellung sind der Einlass und der Auslass des Ventilgehäuses durch den Ventilkanal fluidleitend miteinander verbunden. Dabei ermöglicht der Regelkugelhahn eine Verbindung, bei der nur geringe Strömungsverluste auftreten. Ausgehend von der Offenstellung befindet sich der Regelkugelhahn nach einer Drehung der Ventilkugel um 90 Grad in Schließstellung, wobei der Strömungsweg zwischen Einlass und Auslass durch die Außenseiten der Ventilkugel dicht abgesperrt ist und der Ventilkanal senkrecht zur Strömungsrichtung steht. In den zwischen der Offenstellung und der Schließstellung möglichen Winkelstellungen gelangt ein definierter Teil einer in der Regelscheibe enthaltenen Regelkontur in Überdeckung mit dem Ventilkanal. Somit wird ein mehr oder weniger großer Strömungsquerschnitt freigegeben. Dabei bestimmt die Form der Regelkontur in der Regelscheibe eine Regelkennlinie des Regelkugelhahns. Die Regelscheibe arbeitet dabei als geregelte Drosselstelle, die bei unterschiedlichen Durchflussmengen einen definierten Druckabbau ermöglicht.

In DE 197 28 562 C2 ist ein Regelkugelhahn beschrieben, bei dem jeweils eine Regelscheibe vor und hinter der Ventilkugel angeordnet ist. Diese Regelscheiben dienen dabei als geregelte Drosselstellen, wobei jede Regelscheibe eine Stufe zum Druckabbau bildet. Durch die sich an beiden Seiten der Ventilkugel anschließenden Regelscheiben ergibt sich damit ein zweistufiger Druckabbau.

Je nach Art des verwendeten Mediums darf eine gewisse Druckdifferenz je Stufe nicht überschritten werden. Bei Wasser ist beispielsweise ein Druckabbau von 30 bar je Stufe, also je Regelscheibe, möglich. Ein größerer Druckabbau hat einen erhöhten Verschleiß und damit eine eingeschränkte Lebensdauer des Regelkugelhahns zur Folge.

Bei zu großen Druckunterschieden kann dabei das Problem der Kavitation auftreten, also der Entstehung von Dampfblasen durch Unterschreiten eines Dampfdruckes, wodurch extreme Verschleißschäden durch implodieren der Dampfblasen auftreten.

Bei starken Druckunterschieden kann es insbesondere bei gasförmigen Medien zu erhöhten Schallemissionen kommen. Aufgrund gesetzlicher Anforderungen dürfen dabei gewisse Grenzen, beispielsweise von mehr als 85 dB(a), nicht überschritten werden.

Aus diesen Gründen erfolgt bei einem Regelkugelhahn in der Regel eine mehrstufige Druckherabsetzung, beispielsweise wie in DE 19 728 562 C2, durch eine Regelscheibe vor und nach der Ventilkugel, wodurch sich ein zweistufiger geregelter Druckabbau ergibt. Zusätzlich können in einem Abstand zur Regelscheibe noch starre Lochscheiben nachgeschaltet werden, die eine weitere Druckreduzierung bringen.

Das Problem bei derartigen starren Lochscheiben ist allerdings, dass deren durchströmbare Fläche von der Durchsatzmenge unabhängig ist. Das hat zur Folge, dass ein mit einer Lochscheibe erreichbarer Druckabbau mit sinkender Durchsatzmenge quadratisch abnimmt. Durch eine Halbierung der Durchsatzmenge ergibt sich beispielsweise nur ein Viertel des erreichbaren Druckabbaus. Dabei muss eine Lochscheibe auf die maximal zulässige Durchflussmenge abgestimmt werden, wobei bei geringerer Durchflussmenge dann kaum noch ein Druckabbau an der Lochscheibe möglich ist. Dies hat zur Folge, dass an der geregelten Drosselstelle, also an der Regelscheibe, ein höherer Druck abgebaut werden muss, der dann in den überkritischen Bereich gelangen kann, bei dem beispielsweise erhöhte Schallemissionen oder Kavitationen auftreten.

US 2010 0258193 offenbart einen Regelkugelhahn gemäß dem Oberbegriff des Anspruchs 1.

Der Erfindung liegt nun die Aufgabe zugrunde, die Nachteile des Standes der Technik zu beheben und einen Regelkugelhahn bereit zu stellen, der einen mehrstufigen geregelten Druckabbau ermöglicht und über einen großen Durchflussmengenbereich einsetzbar ist.

Hauptmerkmale der Erfindung sind im kennzeichnenden Teil von Anspruch 1 angegeben. Ausgestaltungen sind Gegenstand der Ansprüche 2 bis 8.

Erfindungsgemäß ist also vorgesehen, nicht nur die durchströmbare Fläche der Regelscheibe zu regeln, sondern auch die durchströmbare Fläche der Lochscheibe. Durchströmbare Fläche bezeichnet dabei eine Gesamtgröße der oder aller freien Öffnungen der Regelscheibe bzw. Lochscheibe. Wenn die Ventilkugel nur eine verminderte Durchsatzmenge zulässt, ergibt sich eine Reduzierung der durchströmbaren Fläche der Lochscheibe, sodass der geforderte Druckabbau an der Lochscheibe sichergestellt wird. In der Offenstellung des Regelkugelhahns ist die durchströmbare Fläche der Regelscheibe und der Lochscheibe maximal und wird mit Verdrehung der Ventilkugel in Richtung Schließstellung verringert. Die Regelscheibe weist dafür in der Regel eine konkave, zur Ventilkugel gerichtete, Innenseite auf, deren Krümmung an den Radius der Ventilkugel angepasst ist. Dadurch gibt die Ventilkugel immer nur einen definierten Teil der Fläche der Regelscheibe frei, durch die das Medium fließen kann. Eine verringerte Überdeckung des Ventilkanals mit der Regelscheibe bzw. der Regelkontur verringert also die durchströmbare Fläche der Regelscheibe. Die Außenseite der Regelscheibe kann eben ausgebildet sein und beispielsweise senkrecht zur Strömungsrichtung verlaufen.

Zwischen der Regelscheibe und der Lochscheibe sind parallel durchströmbare Kammern ausgebildet, wobei eine Anzahl durchströmter Kammern von der Winkelstellung der Ventilkugel abhängig ist. Der Zugang zu den Kammern durch die Regelkontur der Regelscheibe wird dann durch die Winkelstellung der Ventilkugel bestimmt. Bei einer Halboffenstellung der Ventilkugel steht also beispielsweise die Hälfte des Ventilkanals in Überdeckung mit der Regelscheibe, sodass das Medium durch die soweit freie Regelkontur strömen und auf die an der anderen Seite der Regelscheibe ausgebildeten Kammern fließen kann, deren Einlässe mit der freien Regelkontur in Überdeckung stehen. Kammern, deren Einlässe in Überdeckung mit einem durch die Ventilkugel verschlossenen Bereich der Regelkontur in Überdeckung sind, können nicht vom Medium durchströmt werden. Bei einer weiteren Öffnung gelangt der Ventilkanal in Überdeckung mit einem größeren Bereich der Regelkontur der Regelscheibe und gibt damit den Zugang zu weiteren Kammern frei. Die Kammern führen das Fluid zur Lochscheibe, die die Auslässe der Kammern abdeckt. Die durchströmbare Fläche der Lochscheibe nimmt daher mit zunehmender Anzahl durchströmter Kammern ebenfalls zu. Damit ist die durchströmbare Fläche der Lochscheibe von der Winkelstellung der Ventilkugel abhängig und es wird eine zweite regelbare Drosselstelle zum Druckabbau erhalten, der in der gewünschten Relation zur Durchflussmenge steht.

Erfindungsgemäß ist dabei eine Fläche der Lochscheibe je Kammer unterschiedlich. Damit können beliebige Kennlinien des Regelkugelhahns erzeugt werden. Insbesondere ist es dadurch möglich, eine lineare, progressive oder degressive Kennlinie zu erhalten.

In einer anderen bevorzugten Ausführungsform sind die Kammern durch Stege voneinander getrennt, die fluiddicht an der Regelscheibe und der Lochscheibe anliegen und insbesondere stoffschlüssig oder einstückig mit der Regelscheibe oder der Lochscheibe ausgebildet sind. Die Kammern sind also durch die Stege, die Regelscheibe und die Lochscheibe definiert. Dabei kann eine in Strömungsrichtung wirkende Kraft auf die Lochscheiben wirken, beispielsweise eine Federkraft, sodass sich die Lochscheiben über die Stege an der Regelscheibe abstützen und eine fluiddichte und spielfreie Verbindung erhalten wird. Dabei kann ein Abstand zwischen den Stegen konstant sein.

Bevorzugterweise ist ein Abstand zwischen den Stegen aber unterschiedlich, wobei der Abstand insbesondere in einer Richtung, die einem zunehmendem Öffnungswinkel der Ventilkugel entspricht, zunimmt. Dadurch ist es möglich, beispielsweise eine lineare, eine progressive oder degressive Regelkennlinie zu erzeugen.

Vorzugsweise ist eine Stirnseite der Stege rund oder spitz zulaufend ausgebildet. Die andere Stirnseite der Stege ist in der Regel fest mit der Lochscheibe bzw. der Regelscheibe verbunden oder sogar einstückig mit der Lochscheibe oder der Regelscheibe ausgebildet. Durch eine runde oder spitze Ausgestaltung der Stirnseite der Stege wird eine definierte Kontaktfläche zwischen dem Steg und der Regelscheibe bzw. der Lochscheibe erhalten, wobei gegebenenfalls in der Lochscheibe oder der Regelscheibe Ausnehmungen vorgesehen sein können, um eine Zentrierung und weiter verbesserte Abdichtung zu gewährleisten.

In einer bevorzugten Ausgestaltung verlaufen die Stege parallel zur Strömungsrichtung. Durch die Stege wird die Strömung dann nur sehr wenig beeinflusst und ein Strömungswiderstand klein gehalten.

In einer alternativen Ausgestaltung verlaufen die Stege in einem Winkel kleiner als 90 Grad zur Strömungsrichtung und erzeugen so eine Verwirbelung und Ablenkung der Strömungsrichtung. Damit wird ein zusätzlicher Druckabbau erreicht.

Vorzugsweise sind die Stege um eine parallel zur Strömungsrichtung verlaufende Achse gekrümmt. Insbesondere dann, wenn der Ventilkanal einen kreisförmigen Querschnitt aufweist, ergibt sich eine teilkreisförmige Schnittfläche zwischen dem Ventilkanal und der Regelscheibe. Durch eine gekrümmte Ausbildung der Stege können die Stege dann an die Form der Regelkontur der Regelscheibe angepasst sein, so dass immer nur eine definierte Anzahl an Kammern durchströmt wird. Damit ergibt sich eine verbesserte Regelcharakteristik.

In einer vorteilhaften Ausgestaltung ist an einer der Regelscheibe abgewandten Seite der Lochscheibe mindestens eine weitere Lochscheibe angeordnet, wobei zwischen den Lochscheiben Stege angeordnet sind, zwischen denen Kammern ausgebildet sind. Damit ergibt sich eine weitere Stufe zum Druckabbau. Die Anzahl der durchströmbaren Kammern ergibt sich dabei durch die durchströmbare Fläche der der Regelscheibe zugewandten Lochscheibe und ist damit ebenfalls von der Winkelstellung der Ventilkugel abhängig. Auch diese Drosselstelle ist damit geregelt und somit über einen großen Durchflussmengenbereich wirksam.

Dabei ist besonders bevorzugt, dass eine durchströmbare Fläche der weiteren Lochplatte bei gleicher Winkelstellung der Ventilkugel größer ist als die durchströmbare Fläche der der Regelscheibe benachbarten Lochplatte. Dies kann beispielsweise dadurch realisiert sein, dass die Stege zwischen den Lochscheiben größere Abstände zueinander aufweisen als Stege zwischen der Lochscheibe und der Regelscheibe. Durch eine derartige Ausgestaltung erfolgt eine Berücksichtigung der Volumenzunahme bei der Druckentspannung von gasförmigen Medien. Dadurch werden insbesondere Schallemissionen verringert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1:: einen Regelkugelhahn aus dem Stand der Technik im Längsschnitt;
- Fig. 2:: einen erfindungsgemäßen Regelkugelhahn im Querschnitt;
- Fig. 3:: einen Ausschnitt aus Fig. 2;
- Fig. 4:: einen weiteren Ausschnitt aus Fig. 2;
- Fig. 5: eine weitere Ausführungsform des erfindungsgemäßen Regelkugelhahns.

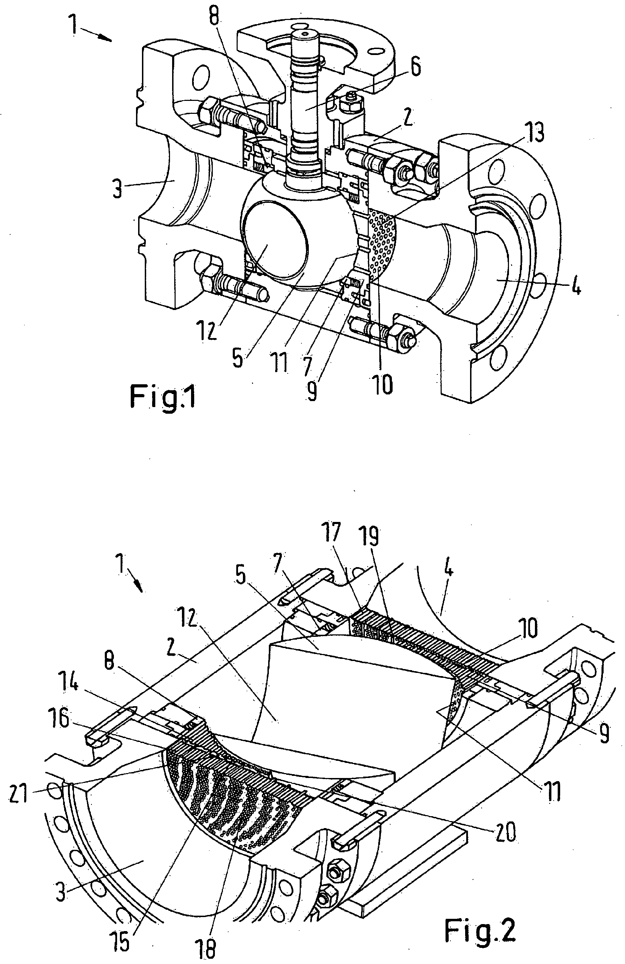

In Fig. 1 ist ein aus dem Stand der Technik bekannter Regelkugelhahn 1 gezeigt. Der Regelkugelhahn 1 weist ein Ventilgehäuse, 2 mit einem Einlass 3 und einem Auslass 4 auf, wobei das Ventilgehäuse 2 dreiteilig ausgeführt ist. Im Strömungsweg zwischen Einlass 3 und Auslass 4 ist eine Ventilkugel 5 angeordnet, die um eine Achse drehbar gelagert ist. Die Achse verläuft senkrecht zu einer Strömungsrichtung. Dafür ist die Ventilkugel 5 über eine Schaltwelle 6 drehbar im Gehäuse 2 gehalten.

Zur Abdichtung der Ventilkugel 5 sind federbelastete Sitzringe 7, 8 vorgesehen. In Strömungsrichtung hinter der Ventilkugel 5 ist eine Regelscheibe 9 angeordnet, die eine ebene Außenseite 10 und eine konkave Innenseite 11 aufweist. Eine Krümmung der Innenseite 11 entspricht dabei einem Radius der Ventilkugel 5, sodass die Innenseite 11 an der Oberfläche der Ventilkugel 5 anliegen kann.

Die Ventilkugel 5 weist einen Ventilkanal 12 auf, der in diesem Ausführungsbeispiel einen kreisförmigen Querschnitt aufweist und nur einen geringfügig kleineren Durchmesser hat als der Einlass 3 und der Auslass 4. Damit tritt bei einer vollständigen Öffnung des Regelkugelhahns 1 nur ein geringer Druckverlust auf. Gezeigt in Fig. 1 ist eine Winkelstellung der Ventilkugel 5, die einer Schließstellung entspricht, in der eine Strömung von Einlass zum Auslass durch die Ventilkugel gesperrt ist.

Zur Offenstellung wird die Ventilkugel 12 über die Schaltwelle 6 gegenüber der gezeigten Position um 90 Grad gedreht. Der Ventilkanal 12 fluchtet schließlich mit dem Strömungsweg zwischen Einlass 3 und Auslass 4.

Je nach Winkelstellung der Ventilkugel 5 wird dabei die Regelscheibe 9 mehr oder weniger freigegeben, indem der Ventilkanal 12 in Überdeckung mit der Regelscheibe 9 gebracht wird. Die Regelscheibe 9 weist eine Regelkontur in Form von Durchlassöffnungen 13 auf, über die eine Regelcharakteristik des Regelkugelhahns 1 definiert wird. Durch einen Austausch der Regelscheibe 9 kann damit die Regelcharakteristik und damit die Kennlinie des Regelkugelhahns verändert werden.

Da die durchströmbare Fläche der Regelscheibe 9 bzw. die der Regelkontur direkt von der Winkelstellung der Ventilkugel 5 abhängig ist, bildet die Regelscheibe 9 eine geregelte Drosselstelle. Unabhängig von einer Durchflussmenge des Mediums lässt sich damit ein definierter Druckabbau erreichen.

In Figur 2 ist eine erfindungsgemäße Weiterbildung des Regelkugelhahns 1 dargestellt, wobei einander entsprechende Elemente mit den gleichen Bezugszeichen versehen sind. Bei diesem Ausführungsbeispiel ist Einlassseitig und Auslassseitig je eine Regelscheibe 9, 14 der Ventilkugel 5 zugeordnet. An Außenseiten 10, 15 der Regelscheiben 9, 14 ist je eine Lochscheibe 16, 17 angeordnet, die mit Löchern 18 versehen ist, die eine durchströmbare Fläche der Lochscheiben bilden. Zwischen den Regelscheiben 9, 14 und der jeweiligen Lochscheibe 16, 17 sind Stege 19, 20 ausgebildet, über die die Lochscheiben 16, 17 an den Regelscheiben 9, 14 abgestützt sind. Zwischen den Stegen 19, 20 sind fluiddicht voneinander getrennte Kammern ausgebildet, durch die ein Medium je nach Stellung der Ventilkugel 5 von der Regelscheibe 9, 14 durch die Lochscheibe 16, 17 fließen kann. Die Anzahl durchströmbarer Kammern ist dabei von der Winkelstellung der Ventilkugel 5 abhängig, sodass auch die durchströmbare Fläche der Lochscheibe 16, 17 von der Winkelstellung der Ventilkugel 5 abhängig ist.

Durch die erfindungsgemäße Weiterbildung wird also ein vierstufiger geregelter Druckabbau erhalten. Dabei ist nicht nur die durchströmbare Fläche der Regelscheiben 9, 14 von der Winkelstellung der Ventilkugel 5 abhängig, sondern auch die durchströmbare Fläche der Lochscheiben 16, 17. Unabhängig von der eingestellten Durchflussmenge ist damit ein wirksamer Druckabbau über die Lochscheiben 16, 17 möglich.

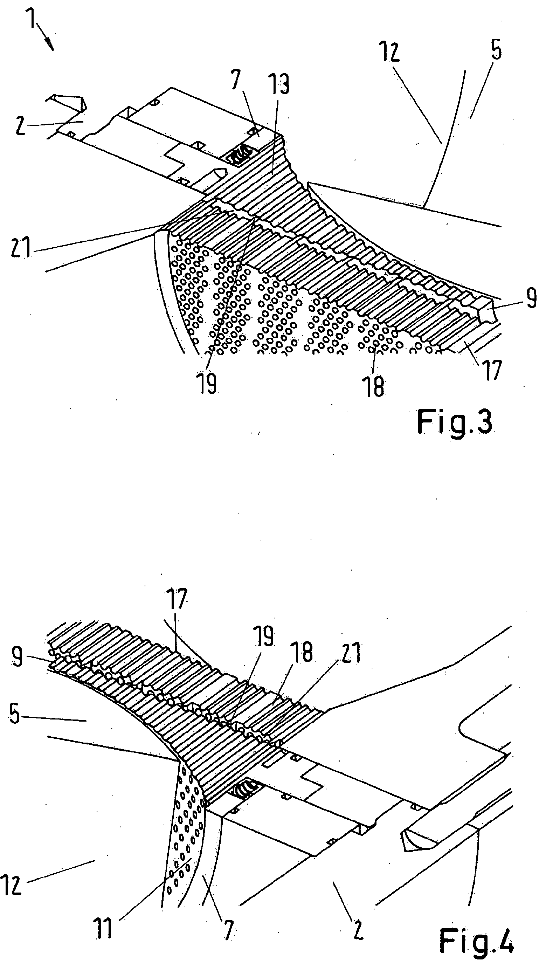

In Fig. 3 und 4 ist ein Detailausschnitt von Fig. 2 aus zwei unterschiedlichen Blickwinkeln gezeigt. Die Ventilkugel 5 befindet sich dabei in einer leicht geöffneten Stellung, sodass ein Medium, wie beispielsweise Wasser oder ein Gas, durch den Ventilkanal 12 gelangen kann. Dabei gibt die Ventilkugel 5 nur einen kleinen Teil der Regelkontur der Regelscheibe 9 frei, durch deren Durchlassöffnungen 13 das Medium strömt. Bei der in den Fig. 3 und 4 gezeigten Winkelstellung der Ventilkugel 5 kann das Medium dann nur in eine einzige zwischen zwei Stegen 19 gebildete Kammer 21 gelangen und somit nur durch einen relativ kleinen Bereich der Lochscheibe 17 strömen. Die Größe dieser durchströmbaren Fläche entspricht dabei der Größe des Querschnitts der Kammer 21.

Bei einer Verstellung der Ventilkugel 5 in Öffnungsrichtung wird die durchströmte Regelkontur der Regelscheibe vergrößert, sodass das Medium in weitere Kammern gelangen kann. Damit vergrößert sich auch die durchströmbare Fläche der Lochscheibe.

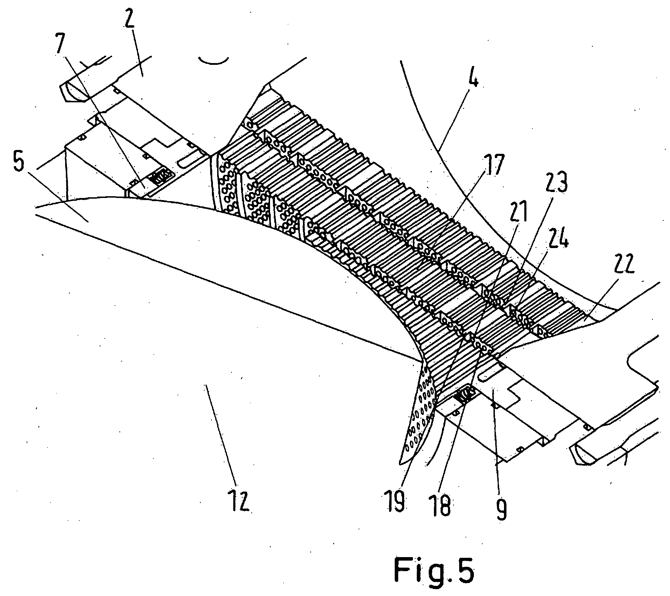

Bei der Ausgestaltung nach Fig. 5 ist an einer der Regelscheiben 9 abgewandten Seite der Lochscheibe 17 eine weitere Lochscheibe 22 angeordnet. Die weitere Lochscheibe 22 ist über Stege 23 an der Lochscheibe 17 abgestützt, wobei sich zwischen den Stegen 23 Kammern 24 befinden. Analog zur ersten Lochscheibe 17 erfolgt damit eine Einstellung der durchströmbaren Fläche der Lochscheibe 22 in Abhängigkeit von der Winkelstellung der Ventilkugel 5. Dabei können die Kammern 24, die zwischen den Lochscheiben 17, 22 ausgebildet sind, einen größeren Querschnitt aufweisen, als die Kammern 21 zwischen der Lochscheibe 17 und der Regelscheibe 9, um das Ausdehnungsverhalten insbesondere gasförmiger Medien in Folge von Druckabbau auszugleichen.

In den gezeigten Ausführungsbeispielen sind die Stege 19, 20, 23 einstückig mit den Lochscheiben 16, 17, 22 ausgebildet. Dabei stützen sich die Lochscheiben 16, 17, 22 jeweils über die Stege 19, 20, 23 ab. Die Stege erstrecken sich halbkreisförmig von einem Rand der Lochscheibe bis zum gegenüberliegenden Rand, sodass voneinander getrennte Kammern entstehen. Dabei sind die Stege gekrümmt, um der Geometrie der von der Ventilkugel freigegebenen Fläche der Regelscheibe zu entsprechen.

Durch die erfindungsgemäße Ausgestaltung ist ein mehrstufiger Druckabbau beim Regelkugelhahn realisierbar, wobei auch bei Teillast ein mehrstufiger geregelter Druckabbau erfolgt. Dies wird dadurch erreicht, dass eine durchströmbare Fläche der Lochscheiben von der Winkelstellung der Ventilkugel abhängig ist. Dafür ist die Anzahl der Kammern, die z.B. einen Strömungsweg zwischen Regelscheibe und Lochscheibe bilden, von der Winkelstellung der Ventilkugel abhängig. Damit kann der Regelkugelhahn zur Regelung flüssiger und gasförmiger Medien eingesetzt werden, wobei aufgrund der mehrstufigen Druckreduzierung eine Kavitation vermieden wird und ein Verschleiß gering gehalten bleibt, wobei gleichzeitig Schallemissionen in geringen Grenzen gehalten werden. Die Ventilkugel 5 wird in die gewünschte Winkelstellung gebracht, mit der die Durchflussmenge des flie ßenden Mediums eingestellt wird. Das Medium fließt dann durch die Regelkontur der Regelscheiben, soweit diese in Überdeckung mit dem Ventilkanal ist, und durch eine entsprechende Anzahl von Kammern zu den Lochscheiben, wobei durch die Stege eine Durchströmung der gesamten Fläche der Lochscheiben verhindert wird, solange die Ventilkugel nicht in vollständiger Offenstellung steht. Bei nicht vollständiger Öffnung des Regelkugelhahns ist die durchströmbare Fläche der Lochscheibe also reduziert. Damit kann die gewünschte Durchsatzmenge bezogen auf den einzuregelnden Lastfall begrenzt werden und gleichzeitig ein zusätzlicher Druckabbau in den Öffnungen bzw. Drosselstellen der nachgeschalteten Lochscheibe(n) erfolgen. Diese können dann wieder nach dem bekannten Stand der Technik dimensioniert werden. Dabei können sowohl Einlassseitig als auch Auslassseitig beliebig viele Lochscheiben eingesetzt werden, sodass die Anzahl der Drosselstellen und damit die Mehrstufigkeit des Druckabbaus keiner Begrenzung unterliegt. Auch bei Teillast, also einer reduzierten Durchflussmenge, ist bei den nachgeschalteten Lochscheiben ein ausreichender Druckabbau sicher gestellt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Regelkugelhahn
- 2: Ventilgehäuse
- 3: Einlass
- 4: Auslass
- 5: Ventilkugel
- 6: Schaltwelle
- 7: Sitzring
- 8: Sitzring
- 9: Regelscheibe
- 10: Außenseite
- 11: Innenseite
- 12: Ventilkanal
- 13: Durchlassöffnung
- 14: Regelscheibe
- 15: Außenseite
- 16: Lochscheibe
- 17: Lochscheibe
- 18: Löcher
- 19: Stege
- 20: Stege
- 21: Kammer
- 22: Lochscheibe
- 23: Stege
- 24: Kammer

## Patentansprüche

1. Regelkugelhahn (1) mit einem Ventilgehäuse (2), das einen Einlass (3) und einen Auslass (4) aufweist, und mit einer senkrecht zu einer Strömungsrichtung drehbaren Ventilkugel (5), die mindestens einen Ventilkanal (12) aufweist und in beliebige Winkelstellungen zwischen einer Offenstellung, in der der Einlass (3) und der Auslass (4) fluidleitend miteinander verbunden sind, und einer Schließstellung, in der der Einlass (3) und der Auslass (4) voneinander getrennt sind, bewegbar ist, wobei mindestens eine Regelscheibe (9, 14) zur Ventilkugel (5) benachbart ist und an einer von der Ventilkugel (5) abgewandten Außenseite (10) der Regelscheibe (9, 14) mindestens eine Lochscheibe (16,17, 22) angeordnet ist, wobei eine durchströmbare Fläche der Lochscheibe (16, 17, 22) von der Winkelstellung der Ventilkugel (5) abhängig ist, wobei zwischen der Regelscheibe (9, 14) und der Lochscheibe (16, 17) parallel durchströmbare Kammern (21) ausgebildet sind, wobei eine Anzahl durchströmbarer Kammern (21) von der Winkelstellung der Ventilkugel (5) abhängig ist, **dadurch gekennzeichnet, dass** eine durchströmbare Fläche der Lochscheibe (16, 17, 22) je Kammer (21) unterschiedlich ist.

2. Regelkugelhahn nach Anspruch 1, **dadurch gekennzeichnet, dass** die Kammern (21) durch Stege (19, 20) voneinander getrennt sind, die fluiddicht an der Regelscheibe (9, 14) und der Lochscheibe (16, 17) anliegen und insbesondere einstückig mit der Regelscheibe (9, 14) oder der Lochscheibe (16, 17) ausgebildet sind.

3. Regelkugelhahn nach Anspruch 2, **dadurch gekennzeichnet, dass** ein Abstand zwischen den Stegen (19, 20) unterschiedlich ist.

4. Regelkugelhahn nach Anspruch 2 oder 3, **dadurch gekennzeichnet, dass** zumindest eine Stirnseite der Stege (19, 20) rund oder spitz zulaufend ausgebildet ist.

5. Regelkugelhahn nach einem der Ansprüche 2 bis 4, **dadurch gekennzeichnet, dass** die Stege (19, 20) in einem Winkel kleiner 90° oder parallel zur Strömungsrichtung verlaufen.

6. Regelkugelhahn nach einem der Ansprüche 2 bis 5, **dadurch gekennzeichnet, dass** die Stege (19, 20) um eine parallel zur Strömungsrichtung verlaufende Achse gekrümmt sind.

7. Regelkugelhahn nach einem der vorhergehenden Ansprüche, **dadurch gekennzeichnet, dass** an einer der Regelscheibe (9, 14) abgewandten Seite der Lochscheibe (16, 17) mindestens eine weitere Lochscheibe (22) angeordnet ist, wobei zwischen den Lochscheiben (7, 22) Stege (23) angeordnet sind, zwischen denen Kammern (24) ausgebildet sind.

8. Regelkugelhahn nach Anspruch 7, **dadurch gekennzeichnet, dass** eine durchströmbare Fläche der weiteren Lochscheibe (22) bei gleicher Winkelstellung der Ventilkugel (5) größer ist als die durchströmbare Fläche der der Regelscheibe (9, 14) benachbarten Lochscheibe (16, 17).

## Claims

1. Control ball valve (1) with a valve housing (2), which has an inlet (3) and an outlet (4), and with a valve ball (5) which is rotatable perpendicularly to a flow direction and has at least one valve channel (12) and can be moved into various angular positions between an open position, in which the inlet (3) and the outlet (4) are connected to each other in a fluid-conveying manner, and a closed position in which the inlet (3) and outlet (4) are separated from each other, wherein at least one regulating disk (9, 14) is adjacent to the valve ball (5) and arranged on an outer side (10) of the regulating disk (9, 14) facing away from the valve ball (5) is at least one perforated disk (16, 17, 22), wherein a flow-through area of the elongated disk (16, 17, 22) is dependent on the angular position of the valve ball (5), wherein between the regulating disk (9, 14) and the perforated disk (16, 17) parallel flow-through chambers (21) are formed, wherein a number of flow-through chambers (21) is dependent on the angular position of the valve ball (5), **characterised in that** a flow-through area of the perforated disk (16, 17, 22) is different for each chamber (21).

2. Control ball valve according to claim 1 **characterised in that** the chambers (21) are separated from each other by struts (19, 20) which are in fluid-tight contact with the regulating disk (9, 14) and the perforated disk (16, 17) and in particular are designed in one piece with the regulating disk (9, 14) or the perforated disk (16, 17).

3. Control ball valve according to claim 2 **characterised in that** a separation between the struts (19, 20) differs.

4. Control ball valve according to claim 2 or 3 **characterised in that** at least one front side of the struts (19, 20) is round or tapers to a point.

5. Control ball valve according to any one of claims 2 to 4 **characterised in that** the struts (19, 20) extend at an angle of less than 90° or parallel to the direction of flow.

6. Control ball valve according to any one of claims 2 to 5 **characterised in that** the struts (19, 20) are bent around an axis running parallel to the direction of flow.

7. Control ball valve according to any one of the preceding claims **characterised in that** on a side of the perforated disk (16, 17) facing away from the regulating disk (9, 14) at least one additional perforated disk (22) is arranged, wherein between the perforated disks (7, 22) struts (23) are arranged between which chambers (24) are formed.

8. Control ball valve according to claim 7 **characterised in that** at the same angular position of the valve ball (5) a flow-through area of the additional perforated disk (22) is larger than the flow-through area of the perforated disk (16, 17) adjacent to the regulating disk (9,14).

## Revendications

1. Robinet de régulation à boisseau sphérique (1) avec un corps de vanne (2) qui comporte une entrée (3) et une sortie (4) et avec une sphère de vanne (5) qui peut tourner perpendiculairement à un sens d'écoulement, qui comporte au moins un canal de vanne (12) et qui est déplaçable dans des positions angulaires quelconques entre une position ouverte, dans laquelle l'entrée (3) et la sortie (4) sont reliées entre elles de manière à conduire le fluide, et une position fermée, dans laquelle l'entrée (3) et la sortie (4) sont séparées l'une de l'autre, au moins un disque de régulation (9, 14) étant au voisinage de la sphère de vanne (5) et au moins un disque à trous (16, 17, 22) étant agencé sur un côté extérieur (10), éloigné de la sphère de vanne (5), du disque de régulation (9, 14), la surface traversable du disque à trous (16, 17, 22) étant dépendante de la position angulaire de la sphère de vanne (5), des chambres (21) traversables en parallèle étant conçues entre le disque de régulation (9, 14) et le disque à trous (16, 17), le nombre de chambres traversables (21) étant dépendant de la position angulaire de la sphère de vanne (5), **caractérisé en ce que** la surface traversable du disque à trous (16, 17, 22) est différente selon la chambre (21).

2. Robinet de régulation à boisseau sphérique selon la revendication 1, **caractérisé en ce que** les chambres (21) sont séparées les unes des autres par des traverses (19, 20) qui s'appuient de manière étanche au fluide contre le disque de régulation (9, 14) et contre le disque à trous (16, 17) et qui sont notamment conçues d'une seule pièce avec le disque de régulation (9, 14) ou avec le disque à trous (16, 17).

3. Robinet de régulation à boisseau sphérique selon la revendication 2, **caractérisé en ce que** les distances entre les traverses (19, 20) sont différentes.

4. Robinet de régulation à boisseau sphérique selon la revendication 2 ou 3, **caractérisé en ce qu'**au moins un côté frontal des traverses (19, 20) est conçu arrondi ou conique.

5. Robinet de régulation à boisseau sphérique selon l'une des revendications 2 à 4, **caractérisé en ce que** les traverses (19, 20) s'étendent selon un angle inférieur à 90° par rapport au sens d'écoulement ou parallèlement au sens d'écoulement.

6. Robinet de régulation à boisseau sphérique selon l'une des revendications 2 à 5, **caractérisé en ce que** les traverses (19, 20) sont courbées autour d'un axe s'étendant parallèlement au sens d'écoulement.

7. Robinet de régulation à boisseau sphérique selon l'une des revendications précédentes, **caractérisé en ce qu'**au moins un autre disque à trous (22) est agencé sur un côté, éloigné du disque de régulation (9, 14), du disque à trous (16, 17), des traverses (23) entre lesquelles sont conçues des chambres (24) étant agencées entre les disques à trous (7, 22).

8. Robinet de régulation à boisseau sphérique selon la revendication 7, **caractérisé en ce que** la surface traversable de l'autre disque à trous (22) est plus grande, pour une même position angulaire de la sphère de vanne (5), que la surface traversable du disque à trous (16, 17) voisin du disque de régulation (9, 14).
